# EUROPÄISCHE PATENTSCHRIFT

(11) **EP 4 441 385 B1**
(45) Veröffentlichungstag und Bekanntmachung des Hinweises auf die Patenterteilung: **12.08.2026**
(21) Anmeldenummer: 22822492.9
(22) Anmeldetag: 28.11.2022
(51) Int. Cl.: F16D 3/56, F16D 3/60, F16D 3/62

(54) **ACHSKUPPLUNG**
AXLE COUPLING
ACCOUPLEMENT D'ESSIEU

(30) Priorität: 10.02.2022 DE 102022201369
(43) Veröffentlichungstag der Anmeldung: 09.10.2024
(73) Patentinhaber: Siemens Mobility GmbH, 80997 München (DE)
(72) Erfinder: SEITZ, Peter, 91224 Pommelsbrunn (DE); PFANNSCHMIDT, Bernd, 90574 Rosstal (DE)
(74) Vertreter: Siemens Patent Attorneys
(86) Internationale Anmeldenummer: PCT/EP2022/083423
(87) Internationale Veröffentlichungsnummer: WO 2023/151843

(56) Entgegenhaltungen:
- EP-A1- 0 035 283
- EP-A1- 3 707 401
- EP-B1- 3 707 401
- DE-A1- 102005 013 721
- DE-B3- 102020 111 442
- US-A- 4 790 248

## Beschreibung

Die vorliegende Erfindung betrifft eine Achskupplung, insbesondere für einen Bahnantrieb. Die vorliegende Erfindung betrifft insbesondere eine Achskupplung, durch welche ein Antriebsmoment und eine Zugkraft von einem Antrieb auf eine Radsatzwelle übertragbar ist. Die vorliegende Erfindung betrifft ferner einen Antriebsstrang für ein Fahrzeug, als auch ein Fahrzeug, welche eine entsprechende Achskupplung aufweisen.

Es ist beispielsweise bei Bahnantrieben bekannt, dass eine Antriebskraft von einem Motor, insbesondere über ein Getriebe, auf eine Radsatzwelle übertragen wird. Die Radsatzwelle dient dazu, Antriebsräder anzutreiben. Zum Übertragen der Antriebskraft von dem Antrieb auf die Radsatzwelle werden Achskupplungen verwendet. Ebenso kann durch die Achskupplung eine Zugkraft auf die Radsatzwelle übertragen werden.

US 4 790 248 A offenbart eine kardanische Doppelkupplung zwischen einer Hohlwelle und einer durch diese gehenden Welle eines Schienenfahrzeugs. Die Doppelkupplung besteht aus einer hohlstumpfförmigen, die Welle mit Spiel umschließenden Zwischenwelle sowie an deren Enden angeordneten elastischen und gelenkigen Kupplungen. Die einander zugekehrte Hälften der Kupplungen enthalten eine gemeinsame Nabe in Form der Zwischenwelle. Die Außenhälften der Kupplungen besitzen der Hohlwelle bzw. der Welle angepasste Naben. Jede der Kupplungen weist von ihren Naben ausgehende und in einer zu den Wellen senkrechten, gemeinsamen Ebene abwechselnd hintereinander liegende Arme auf. An den Enden der Arme sind jeweils zwei wellenparallele Bolzen in Drehrichtung nebeneinander angeordnet, von denen zumindest an einer der Kupplungsseiten je ein sphärisch bewegbarer Lenker zu den benachbarten Armen ausgeht.

EP 0 035 283 A1 offenbart eine homokinetische Wellenkupplung, welche zwischen zwei zu kuppelnden Wellen einen Knickwinkel und erforderlichenfalls einen radialen und einen axialen Versatz zulässt. Zwischen zwei Kupplungshälften sind Zwischenglieder angeordnet. Jede Kupplungshälfte enthält eine Nabe mit jeweils vier radialen Armen, die um 90° zueinander winkelversetzt sind. Die Zwischenglieder enthalten Ringe, die Lageransätze aufweisen. Ein Arm endet in einem zylindrischen Gehäuse, in dem ein Zapfen mit einer mittigen Wulst sitzt. Der Zapfen ist über eine Gummikalotte im Gehäuse elastisch und allseits beweglich gelagert. Auf abgeflachten Abschnitten an beiden Enden der Zapfen sitzen laschenartig ausgebildete Lenker. Jeder der Arme trägt eine auf diese Weise aufgebaute Lageranordnung. Die Lageransätze des ersten Zwischenglieds enthalten in Axialrichtung nach beiden Seiten des Ringes sich erstreckende axiale Arme, die an ihren Enden je eine Lageranordnung tragen. Dabei sind die Lageransätze der Zwischenglieder über Paare von laschenartigen Lenkern mit den benachbarten Lageranordnungen verbunden.

EP 3 707 401 A1 offenbarteine Kupplungsvorrichtung, welche einen ersten Flansch und einen zweiten Flansch aufweist. Der erste Flansch weist einen Befestigungsabschnitt und Flanscharme auf, wobei an der Stirnseite des Befestigungsabschnittes eine Verzahnung ausgebildet ist. Die Flanscharme weisen axial gegenüberliegend eine erste Befestigungsfläche und eine zweite Befestigungsfläche auf. Der zweite Flansch weist einen Befestigungsabschnitt und Flanscharme auf. Die Flanscharme weisen eine erste Befestigungsfläche und axial gegenüberliegend eine zweite Befestigungsfläche auf. Die Flanscharme des ersten Flansches und die Flanscharme (240) des zweiten Flansches greifen derart ineinander, dass sie in einer gemeinsamen Eben liegen. An den Befestigungsflächen der Flanscharme sind jeweils zwei fadenverstärkte Gelenkvorrichtungen vorgesehen, die Kupplungskörper aufweisen, die über Schrauben mit den Befestigungsflächen der Flanscharme verschraubt sind. Jeder Flanscharm ist über einen Kupplungskörper mit dem benachbarten Flanscharm verbunden. Jeder Kupplungskörper ist über Schrauben mit benachbarten Flanscharmen verschraubt und liegt an den benachbarten Flanscharmen an. Die Kupplungskörper sind jeweils in einer Ebene und in Umfangsrichtung zueinander versetzt an den Flanscharmen angeordnet. Die fadenverstärkte Gelenkvorrichtung weist an einer axialen Seite der Flanscharme eine erste Ebene mit Kupplungskörpern und an der entgegengesetzten axialen Seite der Flanscharme eine zweite Ebene mit Kupplungskörpern auf. Jeder Flanscharm ist über jeweils eine Schraube mit in Umfangsrichtung zueinander versetzt angeordneten Kupplungskörpern verbunden. Jeder Flanscharm weist zwei Öffnungen auf, in die die Schraube in axialer Richtung aufeinander zu eingeschraubt werden können, d.h. die Schrauben werden an entgegengesetzten axialen Seiten der Flanscharme in dieselben eingeschraubt.

DE 10 2020 111 442 B3 offenbart ein Kupplungssystem für Antriebe, enthaltend mindestens ein einen Winkelversatz ausgleichendes Kupplungselement und mindestens ein Torsionsschwingungen und Stöße dämpfendes elastisches Kupplungselement, die miteinander lösbar verbunden sind. Dabei ist das elastische Kupplungselement aus mindestens einem Segment ringförmig ausgebildet. Das mindestens eine Segment weist mindestens ein elastisches Verbindungselement auf, über das eine elastische Verbindung zwischen einer Antriebs- und Abtriebsseite herstellbar ist. Das einen Winkelversatz ausgleichende Kupplungselement und das Torsionsschwingungen und Stöße dämpfende elastische Kupplungselement ist auf der Antriebsseite oder Abtriebsseite des Kupplungssystems montierbar. Das Segment weist mindestens ein ausgebildetes Buchsenträgerelement auf, in das ein Buchsenelement eingepresst ist. Dabei weist das Buchsenelement eine innere und eine äußere Buchse auf, die durch das elastische Verbindungselement stoff-, kraft- und/oder formschlüssig verbunden sind. Ein Anschlusselement ist mit dem einen Winkelversatz ausgleichenden Kupplungselement kraft- und/oder formschlüssig verbunden.

Bei bekannten Konstruktionen erfolgt die Übertragung der Antriebskräfte, aber auch der Bremskraft und eine Abstützung des Getriebes, beispielsweise entweder ausschließlich durch elastische Kunststoff-Laschen, die alle Funktionen gleichzeitig übernehmen, oder über getrennte Funktionselemente, wie Gummilager und Metalllaschen. Derartige Lösungen weisen jedoch noch weiteres Verbesserungspotential auf.

Es ist die Aufgabe der vorliegenden Erfindung, die aus dem Stand der Technik bekannten Nachteile zumindest teilweise zu überwinden. Es ist insbesondere die Aufgabe der vorliegenden Erfindung, eine Lösung für eine Achskupplung bereitzustellen, durch welche eine vorteilhafte Übertragung von Antriebskräften und auch von Radialkräften, wie insbesondere Zugkräften, möglich ist, wobei ferner insbesondere eine gute Langlebigkeit mit einem hohen Komfort verbunden werden kann.

Die Lösung der Aufgabe erfolgt erfindungsgemäß zumindest zum Teil durch eine Achskupplung mit den Merkmalen des Anspruchs 1. Die Lösung der Aufgabe erfolgt erfindungsgemäß ferner zumindest zum Teil durch einen Antriebsstrang mit den Merkmalen des Anspruchs 8 sowie durch ein Fahrzeug mit den Merkmalen des Anspruchs 9. Bevorzugte Ausgestaltungen der Erfindung sind in den Unteransprüchen, in der Beschreibung oder den Figuren beschrieben, wobei weitere in den Unteransprüchen oder in der Beschreibung oder den Figuren beschriebene oder gezeigte Merkmale einzeln oder in einer beliebigen Kombination einen Gegenstand der Erfindung darstellen können, wenn sich aus dem Kontext nicht eindeutig das Gegenteil ergibt.

Beschrieben wird eine Achskupplung zum Übertragen eines Antriebsmoments, insbesondere eines Drehmoments, und einer Zugkraft von einem Antrieb auf eine Radsatzwelle, wobei die Achskupplung einen Aufnahmeraum zum Aufnehmen der Radsatzwelle aufweist, wobei der Aufnahmeraum wenigstens durch einen mit der Radsatzwelle verbindbaren Verbindungsabschnitt und einen Antriebsabschnitt gebildet wird, wobei eine Mehrzahl an Buchsenaufnahmen beziehungsweise Buchsenlagern an dem Verbindungsabschnitt angeordnet ist und eine Mehrzahl an Buchsenaufnahmen an dem Antriebsabschnitt angeordnet ist derart, dass die an dem Verbindungsabschnitt angeordneten Buchsenaufnahmen und die an dem Antriebsabschnitt angeordneten Buchsenaufnahmen in einer gemeinsamen Radialebene liegen, wobei zwei benachbarte und an unterschiedlichen Abschnitten angeordnete Buchsenaufnahmen durch axial beidseitig der Buchsenaufnahmen angeordnete Verbindungselemente miteinander befestigt sind, die an durch die Buchsenaufnahmen gelagerten Befestigungsbolzen fixiert sind.

Eine derartige Achskupplung erlaubt gegenüber den Lösungen aus dem Stand der Technik deutliche Vorteile.

Beschrieben wird eine Achskupplung. Diese dient in an sich bekannter Weise dem Übertragen eines Antriebsmoments und einer Zugkraft von einem Antrieb auf eine Radsatzwelle. Der Antrieb ist nicht grundsätzlich beschränkt. Beispielsweise kann der Antrieb einen Motor und gegebenenfalls ein Getriebe aufweisen, wobei die Antriebskraft beziehungsweise das Antriebsmoment von dem Motor beziehungsweise dem Getriebe auf die Radsatzwelle übertragen wird.

Hierzu weist die Achskupplung einen Aufnahmeraum zum Aufnehmen der Radsatzwelle auf. Die Radsatzwelle verläuft somit durch diesen Aufnahmeraum, wobei der Aufnahmeraum wenigstens durch einen mit der Radsatzwelle verbindbaren Verbindungsabschnitt und einen Antriebsabschnitt gebildet wird. Die Antriebskraft wird in den Antriebsabschnitt geleitet und durch eine Verbindung mit dem Verbindungsabschnitt über diesen, wenn er mit der Radsatzwelle verbunden ist, an die Radsatzwelle weitergeleitet.

Beispielsweise können sowohl der Verbindungsabschnitt als auch der Antriebsabschnitt einen kreisförmigen Durchlass aufweisen, welcher den Aufnahmeraum ausbildet und durch welchen die Radsatzwelle verläuft.

Ferner kann der Verbindungsabschnitt beispielsweise mit der Radsatzwelle verbunden werden, indem der Verbindungsabschnitt auf die Radsatzwelle geschrumpft wird. Grundsätzlich ist es jedoch vorgesehen, dass der Verbindungsabschnitt derart mit der Achswelle verbindbar ist, dass letztere verdrehfest mit dem Verbindungsabschnitt ausgebildet ist, um das Moment beziehungsweise die Antriebskraft möglichst verlustarm beziehungsweise verlustfrei auf die Radsatzwelle zu übertragen.

Um die Antriebskraft von dem Antriebsabschnitt auf den Verbindungsabschnitt zu übertragen, ist der Verbindungsabschnitt mit dem Antriebsabschnitt verdrehfest verbunden, so dass eine in den Antriebsabschnitt eingeleitete Rotation auf den Verbindungsabschnitt übertragbar ist. Hierzu ist eine Mehrzahl an Buchsenaufnahmen an dem Verbindungsabschnitt angeordnet, also daran befestigt oder Teil dessen, und ist eine Mehrzahl an Buchsenaufnahmen an dem Antriebsabschnitt angeordnet, also befestigt oder Teil dessen. Unter Buchsenaufnahmen sind dabei im Sinne der vorliegenden Erfindung Lager zu verstehen, die wenigstens zwei bolzenartige Verbindungsmittel, wie etwa Schrauben oder Bolzen, lagern beziehungsweise aufnehmen können.

Dabei ist eine Anordnung der Buchsenaufnahmen derart vorgesehen, dass die an dem Verbindungsabschnitt befestigten Buchsenaufnahmen und die an dem Antriebsabschnitt befestigten Buchsenaufnahmen in einer Radialebene liegen. Insbesondere liegen alle Buchsenaufnahmen in einer Radialebene beziehungsweise befinden sich in der gleichen axialen Position.

Hinsichtlich der Befestigung von Antriebsabschnitt und Verbindungsabschnitt ist es ferner vorgesehen, dass zwei benachbarte und an unterschiedlichen Abschnitten befestigte Buchsenaufnahmen durch Verbindungselemente miteinander befestigt sind, die an durch unterschiedliche Buchsenaufnahmen gelagerten Befestigungsbolzen fixiert sind. Hierdurch kann ein erstes Verbindungselement dazu dienen, mit jeweils zwei benachbarten Buchsenaufnahmen befestigt zu sein, wobei die erste Buchsenaufnahme an einem ersten Abschnitt, also Verbindungsabschnitt oder Antriebsabschnitt, angeordnet ist, und wobei die benachbarten Buchsenaufnahmen jeweils an dem anderen Abschnitt, also Antriebsabschnitt oder Verbindungsabschnitt, angeordnet sind. Die Buchsenaufnahmen beider Kupplungshälften sind dabei umfangsmäßig beidseitig mit den Verbindungselementen verbunden, beispielsweise verschraubt.

Die vorgeschlagene Anordnung der Übertragungselemente für das Antriebsmoment ermöglicht eine symmetrische Krafteinleitung und die Trennung der Funktionalitäten über unterschiedliche Elemente beziehungsweise Bauteile. Die Übertragung des Drehmoments sowie der radialen Zug-/Bremskraft erfolgt über die beidseitigen, insbesondere symmetrischen Verbindungselemente. Die Buchsenaufnahmen haben die Funktion der Kraftübertragung in die Kupplungshälften und dienen bevorzugt als elastische, ausgleichende und dämpfende Elemente.

Erfindungsgemäß wird es bevorzugt erlaubt, dass die Verbindungselemente symmetrisch in zwei Radialebenen zum Drehpunkt und Radsatzmitte angeordnet sind und sich die Buchsenaufnahmen in der Biegemitte der Kupplung in einer Ebene befinden. Durch diese Kombination und die spezielle Anordnung von Verbindungselementen und Buchsenaufnahmen in drei Radialebenen mit dem Drehpunkt in der Kupplungsmitte und den beiden Ebenen der Verbindungselemente symmetrisch zur Mitte wird eine Verschränkung der Kupplung durch die radiale Zugkraft vermieden.

Es wird vermieden, dass über eine Hebelwirkung eine unvorteilhafte Verschränkung der Kupplung und somit auch des Antriebs auftritt, wodurch die Zug- und Bremskräfte nicht ausreichend übertragen würden. Erfindungsgemäß wird demgegenüber gerade eine vorteilhafte Übertragung der Zug- und Bremskräfte ermöglicht.

Entsprechend kann es bevorzugt sein, dass die Verbindungselemente symmetrisch axial beidseitig der Buchsenaufnahmen jeweils in einer gemeinsamen Radialebene angeordnet sind.

Durch die genau definierten Geometrien und Toleranzen der Verbindungselemente wird so verhindert, dass die Kupplung im unbelasteten, bzw. gering belasteten Zustand exzentrisch läuft. Schwingungen des Antriebes können so verhindert werden, was die Laufruhe und den Komfort eines mit einer beschriebenen Achskupplung ausgestatteten Fahrzeugs verbessern kann.

Die Verbindungselemente brauchen ferner nicht vorgespannt werden. Dadurch kann Montageaufwand eingespart werden. Ferner könnte es durch die Vorspannung zu einer möglichen Unsymmetrie und damit Exzentrizität der radsatzseitigen Kupplungshälfte zur getriebeseitigen Kupplungshälfte kommen. Demgegenüber kann bei der Anordnung gemäß der vorliegenden Erfindung die Laufgenauigkeit (Exzentrizität) durch die definierte Fertigungsgenauigkeit, wie etwa den Bohrungsabstand der Verbindungselemente bestimmt werden.

Ferner bewirkt die Anordnung der Verbindungselemente hintereinander pro Seite in jeweils einer Radialebene einen relativ geringen Hebel und damit das Verhindern einer unvorteilhaften Biegebeanspruchung der Verbindungsbolzen, wie etwa Verbindungsschrauben beziehungsweise Schraubbolzen. Selbst bei hoher, dauernd anstehenden statischer Radialkräfte, etwa beim Festbremsen beziehungsweise durch eine Feststellbremse, kann eine temporäre Verformung der Verbindungselemente mit einem unförmigen Lauf verhindert werden.

Durch die breite Stützbasis der Befestigungsbolzen, wie etwa Schraubbolzen, ist ferner das Biegemoment auf die Verbindungselemente geringer als bei bekannten Konstruktionen, was die Lebensdauer der Verbindungselemente verlängert.

Erfindungsgemäß sind die Verbindungselemente als metallische Verbindungslamellen ausgebildet. Die Verwendung von Verbindungslamellen erlaubt eine mechanische Stabilität in Zugrichtung und Biegeelastizität, wie auch Langzeitverlässlichkeit. Unter Verbindungslamellen sind insbesondere laschenartige Verbindungselemente zu verstehen, die jeweils zwei Durchgangslöcher zum Aufnehmen und Verbinden zweier Bolzen aufweisen.

Beispielsweise bei dem Vorsehen von Verbindungslamellen aber nicht beschränkt hierauf kann es bevorzugt sein, dass die Verbindungselemente wenigstens eines von einer variierenden Dicke und einer variierenden Breite aufweisen. Somit ist bei jeder oder auch bei einzelnen Verbindungselementen vorgesehen, dass das jeweilige Verbindungselement keine einheitliche Dicke und/oder einheitliche Breite aufweist, sondern sich entlang der Erstreckung des Verbindungselements ändert. In dieser Ausgestaltung kann die Härte beziehungsweise Weichheit eingestellt werden. Beispielsweise kann durch eine geringere Breite oder Dicke eine vergleichsweise weichere Struktur ermöglicht werden beziehungsweise kann durch eine größere Breite oder Dicke eine höhere Härte ermöglicht werden. Entsprechend kann die axiale Steifigkeit der Achskupplung angepasst werden.

Gleiches ist etwa durch die konkrete Struktur der Verbindungselemente beziehungsweise Verbindungslamellen möglich. Beispielsweise kann ein Blech vorgegebener Dicke eine größere Steifigkeit aufweisen als eine Mehrzahl an dünneren Blechen, die sich zu der gleichen Dicke summieren.

Besonders bevorzugt können die als Verbindungslamellen ausgebildeten Verbindungselemente auf die Befestigungsbolzen umgreifenden Buchsen, insbesondere aus Stahl, wie etwa Vergütungsstahl, gelagert sein. Dadurch kann ein Verschleiß an den Befestigungsbolzen, wie etwa Schraubbolzen, durch Lochleibungsdruck signifikant reduziert oder vollständig vermieden werden.

Darüber hinaus stellen die verwendeten Verbindungslamellen einfach herzustellende und kostengünstige Maschinenelemente dar, die ohne Spezialwerkzeuge zu fertigen und anzuwenden sind.

Ferner wird eine gewisse Bewegung in axialer Richtung durch die verwendeten Verbindungslamellen ermöglicht, da diese insbesondere im Vergleich zu starren Lenkern eine bestimmte Verwindung/Torsion erlauben.

Erfindungsgemäß sind die Buchsenaufnahmen als Gummi-Metall-Buchsen ausgebildet. Durch die relativ geringe Nachgiebigkeit derartiger Buchsen bei radialer Belastung ist auch die Möglichkeit einer bleibenden Verformung begrenzt. Im Detail sind Gummi-Metall-Buchsen relativ starr, weshalb sie nur eine geringe Bewegung erlauben. Insbesondere ist in radialer Richtung eine größere Steifigkeit gegeben. Dies ist vorteilhaft, um die Abstützfunktion etwa des Getriebes in radialer Richtung sowie die Zug- und Bremskräfte zu gewährleisten. Die Bewegung in radialer Richtung ist entsprechend gering, was sich positiv auf die Laufgüte der Kupplung beim Lastloslauf und geringer Last auswirkt.

Die verwendeten Buchsenaufnahmen stellen ferner einfach herzustellende, handelsübliche und somit kostengünstige Maschinenelemente dar. Durch das Variieren der Gummihärte und der Gummidicke kann die Kupplungssteifigkeit eingestellt werden.

Es kann ferner bevorzugt sein, dass eine Mehrzahl von mehr als zwei Buchsenaufnahmen an dem Verbindungsabschnitt angeordnet sind und eine Mehrzahl von mehr als zwei Buchsenaufnahmen an dem Antriebsabschnitt angeordnet sind. Beispielsweise können insgesamt sechs Doppel-Buchsenaufnahmen und entsprechend sechs etwa als Verbindungslamellen ausgebildete Verbindungselemente verwendet werden. Durch eine vergleichsweise große Anzahl an Verbindungselementen wird die Gefahr des Ausknickens der Verbindungselemente bei sehr hoher Radialkraft und gleichzeitiger axialer Verlagerung erheblich reduziert oder sogar verhindert.

Es kann weiterhin bevorzugt sein, dass der Antriebsabschnitt ein Getriebeabschnitt ist. In dieser Ausgestaltung kann die Achskupplung somit beispielsweise Teil eines Antriebsstrangs sein, der einen Motor aufweist, der seine Antriebskraft auf ein Getriebe überträgt, welches wiederum auf die Achskupplung wirkt. Derartige Antriebsstränge sind grundsätzlich weit verbreitet, so dass insbesondere in dieser Ausgestaltung die Achskupplung einfach in bestehende Systeme implementierbar ist, da bestehende Herstellungsprozesse so im Wesentlichen bestehen bleiben können. Darüber hinaus bietet sich ein breites Anwendungsfeld für die beschrieben Achskupplung.

Hinsichtlich weiterer Vorteile und technischer Merkmale der Achskupplung wird hiermit auf die Beschreibung des Antriebsstrangs, des Fahrzeugs, die Figuren und die Beschreibung der Figuren verwiesen.

Beschrieben ist ferner ein Antriebsstrang für ein Fahrzeug, insbesondere für ein Bahnfahrzeug, wobei der Antriebsstrang einen Motor, ein mit dem Motor verbundenes Getriebe, eine Radsatzwelle und eine Achskupplung zum Übertragen des Antriebsmomentes vom Getriebe auf die Radsatzwelle umfasst, wobei die Achskupplung ausgestaltet ist, wie vorstehend beschrieben.

Ein derartiger Antriebsstrang kann beispielsweise Teil eines Bahnfahrzeugs sein, so dass eine gute Implementierung in bereits bestehend Systeme sowie eine breite Anwendbarkeit gegeben ist.

Die spezifischen Vorteile eines mit der Achskupplung ausgestatteten Antriebsstrangs können insbesondere darin gesehen werden, dass eine besonders vorteilhafte Übertragung von Antriebskräften, also Drehmomenten, wie auch von Radialzugkräften möglich ist. Dadurch können auch Zug- und Bremskräfte vorteilhaft übertragen werden. Darüber hinaus kann eine sehr gute Langlebigkeit mit einem hohen Komfort verbunden werden.

Hinsichtlich weiterer Vorteile und technischer Merkmale des Antriebsstrangs wird hiermit auf die Beschreibung der Achskupplung, des Fahrzeugs, die Figuren und die Beschreibung der Figuren verwiesen.

Beschrieben wird ferner ein Fahrzeug, wobei das Fahrzeug wenigstens eines von einer Achskupplung und einem Antriebsstrang aufweist, wie diese vorstehend beschrieben sind.

Beispielsweise kann das Fahrzeug ein Bahnfahrzeug sein, da insbesondere für derartige Fahrzeuge entsprechende Antriebsstränge beziehungsweise Achskupplungen geeignet sind.

Die vorstehend beschriebenen Vorteile sind auch für ein beschriebenes Fahrzeug einschlägig, so dass eine besonders vorteilhafte Übertragung von Antriebskräften, also Drehmomenten, wie auch von Radialzugkräften möglich ist. Dadurch können auch Zug- und Bremskräfte vorteilhaft übertragen werden. Darüber hinaus kann eine sehr gute Langlebigkeit mit einem hohen Komfort verbunden werden.

Hinsichtlich weiterer Vorteile und technischer Merkmale des Fahrzeugs wird hiermit auf die Beschreibung der Achskupplung, des Antriebsstrangs, die Figuren und die Beschreibung der Figur verwiesen.

Weitere Einzelheiten, Merkmale und Vorteile des Gegenstandes der Erfindung ergeben sich aus den Unteransprüchen sowie aus der nachfolgenden Beschreibung der Figuren. In den Figuren zeigen:
- Fig. 1: einen Antriebsstrang gemäß einer Ausgestaltung der vorliegenden Erfindung;
- Fig. 2: eine Schnittansicht durch eine Achskupplung für den Antriebsstrang aus Figur 1;
- Fig. 3: eine Detailansicht aus Figur 2;
- Fig. 4: eine teilweise Explosionsdarstellung der Achskupplung aus Figur 2;
- Fig. 5: eine weitere teilweise Explosionsdarstellung der Achskupplung aus Figur 2;
- Fig. 6: eine weitere teilweise Explosionsdarstellung der Achskupplung aus Figur 2; und
- Fig. 7: eine Darstellung einer weiteren Ausgestaltung einer Achskupplung gemäß der vorliegenden Erfindung.

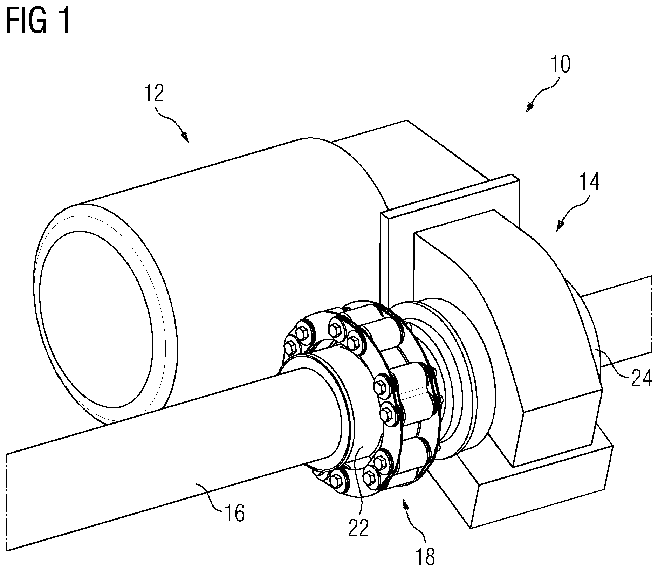

In der Figur 1 ist ein Antriebsstrang 10 in einer Ausgestaltung der vorliegenden Erfindung gezeigt. Der Antriebsstrang 10 ist insbesondere Teil eines Fahrzeugs, wie beispielsweise eines Bahnfahrzeugs und kann etwa Teil eines Schwebeantriebs sein.

Der Antriebsstrang 10 umfasst einen Motor 12, ein mit dem Motor 12 verbundenes Getriebe 14, eine Radsatzwelle 16 und eine Achskupplung 18 zum Übertragen des Antriebsmomentes vom Getriebe 14 auf die Radsatzwelle 16.

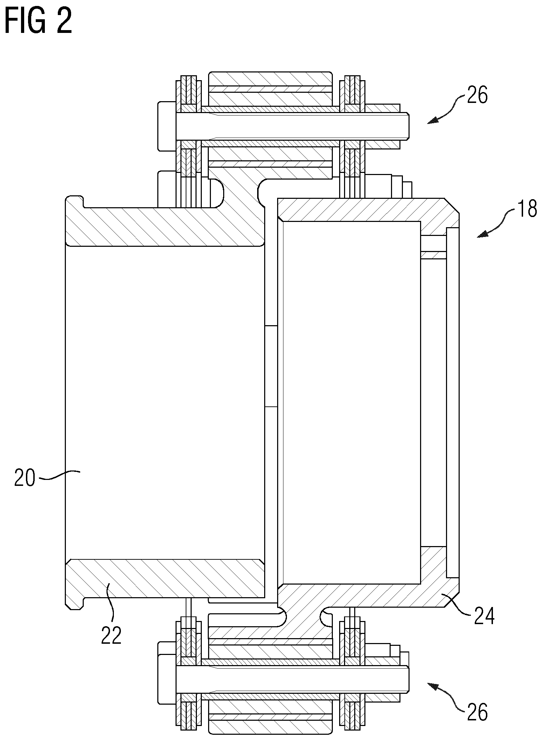

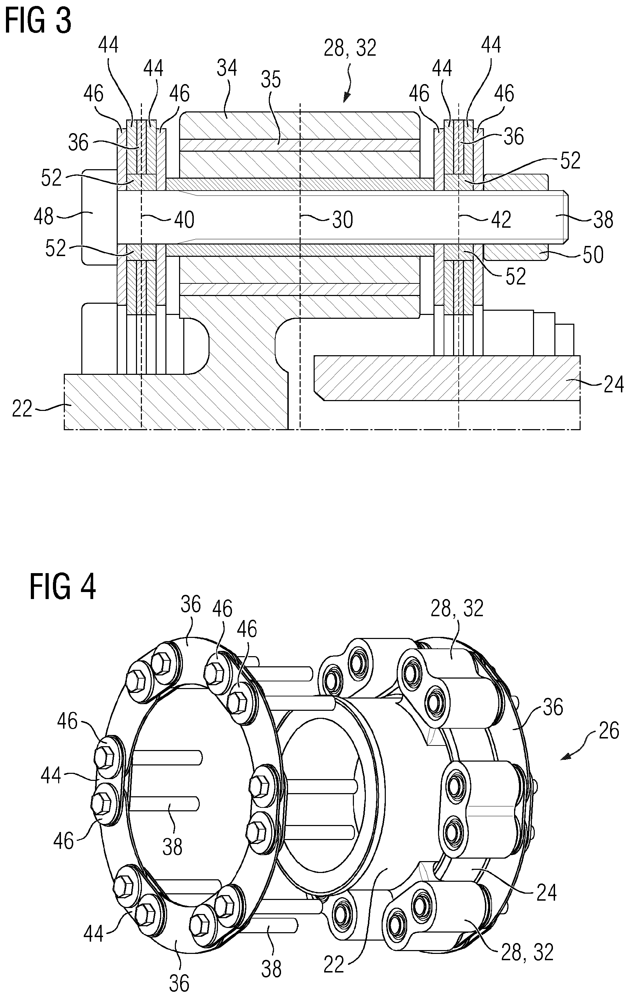

Eine Schnittansicht durch die Achskupplung 18 ist in den Figuren 2 und 3 gezeigt, wobei Figur 3 eine Detailansicht von Figur 2 zeigt.

Figur 2 zeigt dabei, dass die Achskupplung 18 einen Aufnahmeraum 20 zum Aufnehmen der Radsatzwelle 16 aufweist. Der Aufnahmeraum 20 ist durch einen Verbindungsabschnitt 22 und einen Antriebsabschnitt 24 gebildet. In der Figur 1 ist dabei gezeigt, dass der Verbindungsabschnitt 22 mit der Radsatzwelle 16 verbunden ist, was etwa realisierbar ist, indem der Verbindungsabschnitt 22 auf die Radsatzwelle 16 geschrumpft wird. Die Antriebskraft beziehungsweise das Antriebsmoment wird wie vorstehend beschrieben auf den Antriebsabschnitt 24, der somit als Getriebeabschnitt ausgebildet ist, geführt und wird an den Verbindungsabschnitt 22 weitergeleitet. Hierzu sind Antriebsabschnitt 24 und Verbindungsabschnitt 22 verdrehfest miteinander verbunden.

Hierzu ist eine mechanische Verbindung 26 vorgesehen, die im Folgenden im Detail gezeigt ist.

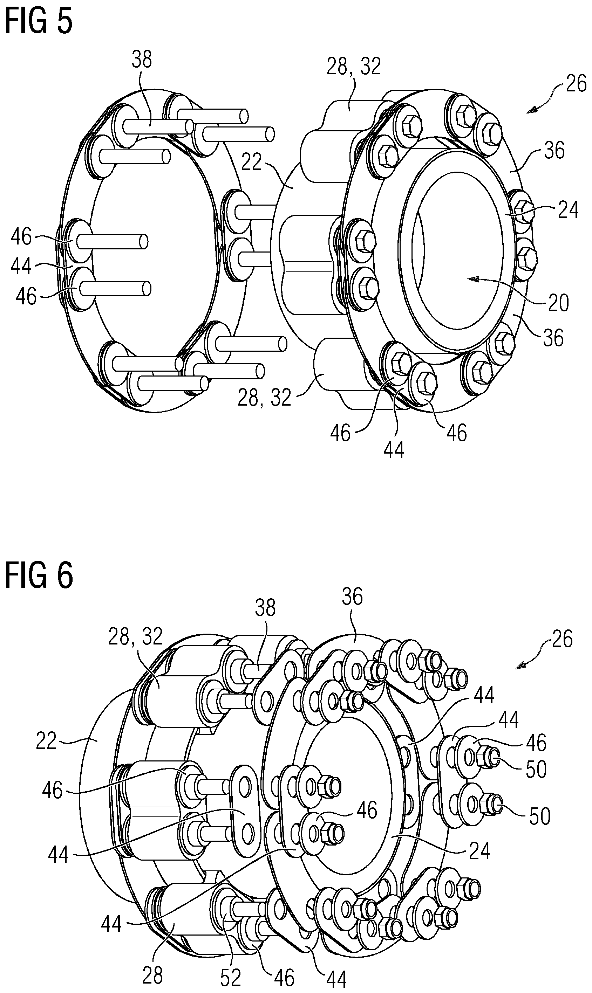

Im Detail ist insbesondere in den Figuren 4 und 5 gezeigt, dass eine Mehrzahl an Buchsenaufnahmen 28 an dem Verbindungsabschnitt 22 angeordnet ist und eine Mehrzahl an Buchsenaufnahmen 28 an dem Antriebsabschnitt 24 angeordnet ist derart, dass die an dem Verbindungsabschnitt 22 angeordneten Buchsenaufnahmen 28 und die an dem Antriebsabschnitt 24 angeordneten Buchsenaufnahmen 28 in einer gemeinsamen Radialebene 30 liegen, wobei die Radialebene 30 eine mittlere Radialebene darstellt. Es ist ferner gezeigt, dass die Buchsenaufnahmen 28 als Gummi-Metall-Buchsen 32 ausgebildet sind, die einen Innenteil 35 aus Gummi und ein inneres und äußeres Gehäuseteil 34 aus Metall aufweisen. In den Buchsenaufnahmen 28 sind entsprechende Befestigungsbolzen 38 angeordnet, die beispielsweise als Schraubbolzen ausgestaltet sein können. Insbesondere sind in jeder Buchsenaufnahme 28 zwei Befestigungsbolzen 38 angeordnet beziehungsweise gelagert.

Grundsätzlich ist es ferner möglich, wie etwa in Figur 4 gezeigt, dass die Buchsenaufnahmen 28 immer abwechselnd an dem Verbindungsabschnitt 22 und dem Antriebsabschnitt 24 angeordnet sind.

Es ist ferner insbesondere in den Figuren 2 und 3 gezeigt, dass zwei benachbarte und an unterschiedlichen Abschnitten angeordnete Buchsenaufnahmen 28 durch axial beidseitig der Buchsenaufnahmen 28 angeordnete Verbindungselemente 36, ausgebildet als metallische Verbindungslamellen, miteinander befestigt sind. Die Verbindungselemente 36 sind ferner an den durch die Buchsenaufnahmen 28 gelagerten Befestigungsbolzen 38 fixiert. Genauer ist gezeigt, dass die Verbindungselemente 36 symmetrisch axial beidseitig der Buchsenaufnahmen 28 jeweils in einer gemeinsamen Radialebene 40, 42 angeordnet sind, wobei die Radialebene 40 eine innere Radialebene darstellt und die Radialebene 42 eine äußere Radialebene darstellt. Somit sind die Buchsenaufnahmen 28 für die Befestigungsbolzen 38 mittig über den Wellenschäften und die Verbindungselemente 36 beziehungsweise metallischen Verbindungslamellen sind symmetrisch axial beidseitig der Buchsenaufnahmen 28 angeordnet.

Die Verbindung 26 ist ferner in einer Ausgestaltung detaillierter insbesondere in den Figuren 5 und 6 gezeigt.

Es ist zu erkennen, dass die Verbindungselemente 36 beziehungsweise die Verbindungslamellen eingerahmt sind durch ein beidseitiges Paar an Unterlegelementen, von denen die inneren Elemente als Verbindungslaschen 44 beide Befestigungsbolzen 38 einer Buchsenaufnahme 28 aufnehmen und miteinander verbinden und die äußeren Elemente als Unterlegscheiben 46 ausgebildet jeweils nur einen Befestigungsbolzen 38 aufnehmen. Die inneren Verbindungslaschen 44 können dadurch die Stabilität beziehungsweise Steifigkeit verbessern, da sie ebenfalls dazu dienen, zwei benachbarte Verbindungselemente 36 miteinander zu verbinden. Darüber hinaus kann so die axiale Steifigkeit erhöht werden. Es ist ferner gezeigt, dass der Schraubenkopf 48 eines als Schraubbolzen ausgebildeten Befestigungsbolzens 38 und eine an dem Gewinde des Schraubbolzens angeordnete Mutter 50 die Laschenanordnungen fixieren.

Hinsichtlich der Buchsenaufnahmen 28 ist ferner dargestellt, dass jeweils drei Buchsenaufnahmen 28 an dem Verbindungsabschnitt 22 angeordnet sind und ferner drei Buchsenaufnahmen 28 an dem Antriebsabschnitt 24 angeordnet sind. Entsprechend werden zur Verbindung der Buchsenaufnahmen 28 insgesamt sechs Verbindungselemente 36 verwendet.

Beispielsweise in der Figur 3 ist ferner gezeigt, dass die Verbindungselemente 36 auf die Befestigungsbolzen 38 umgreifenden Lagerbuchsen 52, insbesondere aus Vergütungsstahl ausgebildet, gelagert sind.

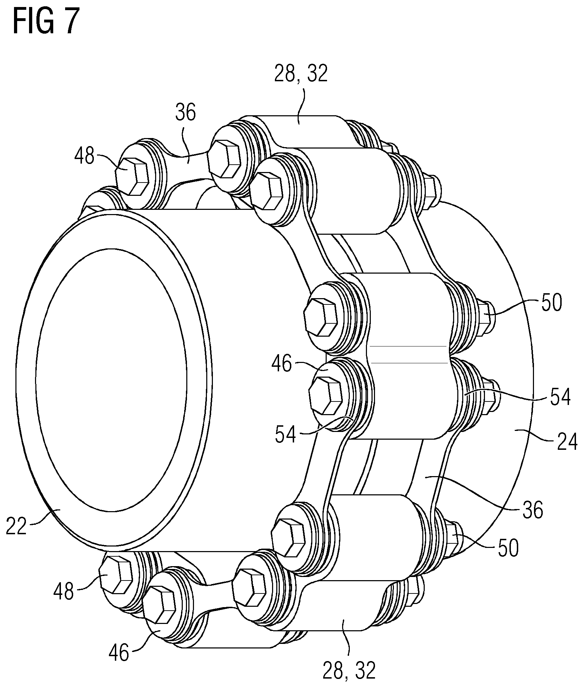

In der Figur 7 ist eine weitere Ausgestaltung einer Achskupplung 18 gezeigt, die in weiten Teilen der zuvor beschriebenen Achskupplung 18 entspricht. Ausweislich der Figur 7 ist jedoch gezeigt, dass die Verbindungslaschen 44 durch Einzelbeilegscheiben 54, beziehungsweise Unterlegscheiben, ersetzt werden und dadurch die axiale Steifigkeit im Vergleich zu der Ausgestaltung gemäß Figur 6 reduziert werden kann.

Darüber hinaus zeigt Figur 7, dass die Verbindungselemente 36 beziehungsweise die Verbindungslamellen eine variierende Breite aufweisen. Dadurch kann wiederum die axiale Steifigkeit im Vergleich zu der Ausgestaltung gemäß Figur 6 reduziert werden.

Die vorbeschriebene Anordnung realisiert zusammenfassend eine drehmoment- und zugkraftübertragenden Achskupplung 18, welche in der Lage ist, hohe Drehmomente und hohe radiale Zugkräfte, bei gleichzeitig vorhandenen Dämpfungseigenschaften in radialer Richtung, zu übertragen und welche sich dabei, insbesondere durch die verwendeten metallischen Lamellen als Verbindungselemente 36, gleichzeitig quer - und biegeweich verhält. Möglich wird somit neben der Drehmomentübertragung auch die Funktion der Abstützung des Antriebes, wie etwa des Getriebes 14, auf der Radsatzwelle beziehungsweise Achswelle 16 sowie der Übertragung der Zug- und Bremskraft. Möglich ist ferner die Dämpfung der Antriebseinflüsse und somit Schonung des Gleiskörpers, insbesondere bei Anwendungen für Bahnfahrzeuge. Vorteilhaft ist somit die geringere axiale Steifigkeit unter Beibehaltung einer großen radialen Steifigkeit, sowie eine durch die definierte Laschengeometrie mit geringen Fertigungstoleranzen bedingte hohe Laufgenauigkeit und gute Laufdynamik.

Ferner können auf einfache Weise die Eigenschaften der Achskupplung 18, wie etwa die axiale Steifigkeit, an das gewünschte Anwendungsgebiet angepasst werden.

Obwohl die Erfindung im Detail durch das bevorzugte Ausführungsbeispiel näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen.

## Patentansprüche

1. Achskupplung (18) zum Übertragen eines Antriebsmoments und einer Zugkraft von einem Antrieb auf eine Radsatzwelle (16), wobei die Achskupplung (18) einen Aufnahmeraum (20) zum Aufnehmen der Radsatzwelle (16) aufweist, wobei der Aufnahmeraum (20) wenigstens durch einen mit der Radsatzwelle (16) verbindbaren Verbindungsabschnitt (22) und einen Antriebsabschnitt (24) gebildet wird, wobei eine Mehrzahl an Buchsenaufnahmen (28) an dem Verbindungsabschnitt (22) angeordnet ist und eine Mehrzahl an Buchsenaufnahmen (28) an dem Antriebsabschnitt (24) angeordnet ist derart, dass die an dem Verbindungsabschnitt (22) angeordneten Buchsenaufnahmen (28) und die an dem Antriebsabschnitt (24) angeordneten Buchsenaufnahmen (28) in einer gemeinsamen Radialebene (30) liegen, wobei zwei benachbarte und an unterschiedlichen Abschnitten (22, 24) angeordnete Buchsenaufnahmen (28) durch axial beidseitig der Buchsenaufnahmen (28) angeordnete Verbindungselemente (36) miteinander befestigt sind, die an durch die Buchsenaufnahmen (28) gelagerten Befestigungsbolzen (38) fixiert sind, **dadurch gekennzeichnet, dass** die Verbindungselemente (36) als metallische Verbindungslamellen und die Buchsenaufnahmen (28) als Gummi-Metall-Buchsen (32) ausgebildet sind.

2. Achskupplung (18) nach Anspruch 1, **dadurch gekennzeichnet, dass** die Verbindungselemente (36) symmetrisch axial beidseitig der Buchsenaufnahmen (28) jeweils in einer gemeinsamen Radialebene (40, 42) angeordnet sind.

3. Achskupplung (18) nach Anspruch 1 oder 2, **dadurch gekennzeichnet, dass** die Verbindungselemente (36) auf die Befestigungsbolzen (38) umgreifenden Lagerbuchsen (52) gelagert sind.

4. Achskupplung (18) nach einem der Ansprüche 1 bis 3, **dadurch gekennzeichnet, dass** eine Mehrzahl von mehr als zwei Buchsenaufnahmen (28) an dem Verbindungsabschnitt (22) angeordnet sind und eine Mehrzahl von mehr als zwei Buchsenaufnahmen (28) an dem Antriebsabschnitt (24) angeordnet sind.

5. Achskupplung (18) nach einem der Ansprüche 1 bis 4, **dadurch gekennzeichnet, dass** die Verbindungselemente (36) wenigstens eines von einer variierenden Dicke und einer variierenden Breite aufweisen.

6. Antriebsstrang (10) für ein Fahrzeug, insbesondere für ein Bahnfahrzeug, wobei der Antriebsstrang (10) einen Motor (12), ein mit dem Motor (12) verbundenes Getriebe (14), eine Radsatzwelle (16) und eine Achskupplung (18) zum Übertragen des Antriebsmomentes vom Getriebe (14) auf die Radsatzwelle (16) umfasst, **dadurch gekennzeichnet, dass** die Achskupplung (18) ausgestaltet ist nach einem der Ansprüche 1 bis **5.**

7. Fahrzeug, **dadurch gekennzeichnet, dass** das Fahrzeug wenigstens eines von einer Achskupplung (18) nach einem der Ansprüche 1 bis 5 und einem Antriebsstrang (10) nach Anspruch 6 aufweist.

8. Fahrzeug nach Anspruch 7, **dadurch gekennzeichnet, dass** das Fahrzeug ein Bahnfahrzeug ist.

## Claims

1. Axle coupling (18) for transferring a drive torque and a tensile force from a drive to a wheelset shaft (16), wherein the axle coupling (18) has a receiving space (20) for receiving the wheelset shaft (16), wherein the receiving space (20) is formed at least by a connecting section (22) which can be connected to the wheelset shaft (16) and a drive section (24), wherein a plurality of bushing receptacles (28) is arranged on the connecting section (22) and a plurality of bushing receptacles (28) is arranged on the drive section (24) such that the bushing receptacles (28) arranged on the connecting section (22) and the bushing receptacles (28) arranged on the drive section (24) lie in a common radial plane (30), wherein two adjacent bushing receptacles (28) arranged on different sections (22, 24) are fastened to one another by way of connecting elements (36) arranged axially on both sides of the bushing receptacles (28), which connecting elements are fixed to fastening pins (38) mounted by the bushing receptacles (28), **characterised in that** the connecting elements (36) are embodied as metallic connecting plates and the bushing receptacles (28) are embodied as rubber-metal bushings (32).

2. Axle coupling (18) according to claim 1, **characterised in that** the connecting elements (36) are arranged symmetrically axially on both sides of the bushing receptacles (28) in a common radial plane (40, 42) in each case.

3. Axle coupling (18) according to claim 1 or 2, **characterised in that** the connecting elements (36) are mounted on bearing bushings (52) encompassing the fastening pins (38).

4. Axle coupling (18) according to one of claims 1 to 3, **characterised in that** a plurality of more than two bushing receptacles (28) are arranged on the connecting section (22) and a plurality of more than two bushing receptacles (28) are arranged on the drive section (24).

5. Axle coupling (18) according to one of claims 1 to 4, **characterised in that** the connecting elements (36) have at least one of a varying thickness and a varying width.

6. Drive train (10) for a vehicle, in particular for a rail vehicle, wherein the drive train (10) comprises a motor (12), a transmission (14) connected to the motor (12), a wheelset shaft (16) and an axle coupling (18) for transferring the drive torque from the transmission (14) to the wheelset shaft (16), **characterised in that** the axle coupling (18) is configured according to one of claims 1 to 5.

7. Vehicle, **characterised in that** the vehicle has at least one of an axle coupling (18) according to one of claims 1 to 5 and a drive train (10) according to claim 6.

8. Vehicle according to claim 7, **characterised in that** the vehicle is a rail vehicle.

## Revendications

1. Accouplement (18) d'essieu pour la transmission d'un couple d'entraînement et d'une force de traction d'un entraînement à un corps (16) d'essieu, dans lequel l'accouplement (18) d'essieu a un espace (20) de réception pour la réception du corps (16) d'essieu, dans lequel l'espace (20) de réception est formé au moins par un tronçon (22) de liaison pouvant être relié au corps (16) d'essieu et par un tronçon (24) d'entraînement, dans lequel une pluralité de logements (28) à douille est disposée sur le tronçon (22) de liaison et une pluralité de logements (28) à douille est disposée sur le tronçon (24) d'entraînement, de manière à ce que les logements (28) à douille disposés sur le tronçon (22) de liaison et les logements (28) à douille disposés sur le tronçon (24) d'entraînement se trouvent dans un plan (30) radial commun, dans lequel deux logements (28) à douille voisins disposés sur des tronçons (22, 24) différents sont fixés l'un à l'autre par des éléments (36) de liaison disposés axialement des deux côtés des logements (28) à douille et fixés entre eux par des boulons (38) de fixation passant dans les logements (28) à douille, **caractérisé en ce que** les éléments (36) de liaison sont constitués sous la forme de lamelles métalliques de liaison et les logements (28) à douille sous la forme de douilles (32) caoutchouc-métal.

2. Accouplement (18) d'essieu suivant la revendication 1, **caractérisé en ce que** les éléments (36) de liaison sont disposés axialement de manière symétrique des deux côtés des logements (28) à douille respectivement dans un plan (40, 42) radial commun.

3. Accouplement (18) d'essieu suivant la revendication 1 ou 2, **caractérisé en ce que** les éléments (36) de liaison sont montés sur des coussinets (52) entourant les boulons (38) de fixation.

4. Accouplement (18) d'essieu suivant l'une des revendications 1 à 3, **caractérisé en ce qu'**une pluralité de plus de deux logements (28) en douille sont disposés sur le tronçon (22) de liaison et une pluralité de plus de deux logements (28) en douille sont disposés sur le tronçon (24) d'entraînement.

5. Accouplement (18) d'essieu suivant l'une des revendications 1 à 4, **caractérisé en ce que** les éléments (36) de liaison ont au moins l'une d'une épaisseur variable et d'une largeur variable.

6. Chaîne (10) cinématique d'un véhicule, en particulier d'un véhicule ferroviaire, dans laquelle la chaîne (10) cinématique comprend un moteur (12), une transmission (14) reliée au moteur (12), un corps (16) d'essieu et un accouplement (18) d'essieu pour la transmission du couple d'entraînement de la transmission (14) au corps (16) d'essieu, **caractérisée en ce que** l'accouplement (18) d'essieu est conformé suivant l'une des revendications 1 à 5.

7. Véhicule, **caractérisé en ce que** le véhicule a au moins l'un d'un accouplement (18) d'essieu suivant l'une des revendications 1 à 5 et d'une chaîne (10) cinématique suivant la revendication 6.

8. Véhicule suivant la revendication 7, **caractérisé en ce que** le véhicule est un véhicule ferroviaire.
